(19) Europäisches Patentamt
European Patent Office
Office européen des brevets

(11) EP 2 174 970 B1

(12) EUROPEAN PATENT SPECIFICATION

(45) Date of publication and mention of the grant of the patent:
**31.05.2017 Bulletin 2017/22**

(21) Application number: **08790238.3**

(22) Date of filing: **18.07.2008**

(51) Int Cl.:
***C08G 64/40*** *(2006.01)* ***B29C 47/08*** *(2006.01)*

(86) International application number:
**PCT/JP2008/001936**

(87) International publication number:
**WO 2009/016804 (05.02.2009 Gazette 2009/06)**

# (54) POLYCARBONATE RESIN AND METHOD FOR PRODUCING THE SAME

POLYKARBONATHARZ UND VERFAHREN ZU SEINER HERSTELLUNG

RÉSINE DE POLYCARBONATE ET SON PROCÉDÉ DE PRODUCTION

(84) Designated Contracting States:
**DE**

(30) Priority: **31.07.2007 JP 2007199043**
**01.08.2007 JP 2007200803**

(43) Date of publication of application:
**14.04.2010 Bulletin 2010/15**

(73) Proprietor: **Mitsubishi Chemical Corporation**
**Chiyoda-ku**
**Tokyo 100-8251 (JP)**

(72) Inventors:
- **UCHIMURA, Ryuuji**
**Kitakyushu-shi**
**Fukuoka 806-0004 (JP)**
- **SHIRAISHI, Yoshitaka**
**Kitakyushu-shi**
**Fukuoka 806-0004 (JP)**
- **TAKAHASHI, Kazuyuki**
**Kitakyushu-shi**
**Fukuoka 806-0004 (JP)**

(74) Representative: **Hoffmann Eitle**
**Patent- und Rechtsanwälte PartmbB**
**Arabellastraße 30**
**81925 München (DE)**

(56) References cited:

| | |
|---|---|
| **WO-A1-2008/090673** | **JP-A- H0 839 551** |
| **JP-A- H01 149 827** | **JP-A- H08 208 829** |
| **JP-A- 2004 536 917** | **JP-A- 2005 126 494** |
| **JP-A- 2005 219 262** | **JP-A- 2005 529 995** |
| **US-A- 5 525 701** | **US-B1- 6 504 002** |

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to a process for producing a polycarbonate resin, more particularly to a process for producing the polycarbonate resin reduced in content of volatile impurities such as phenols.

### Background Art

The polycarbonate resins have excellent mechanical properties such as heat and impact resistance, as well as high dimensional stability and transparency, and have therefore been used for a wide variety of purposes.

For the preparation of polycarbonate resins, there are known, most popularly, melting method (ester exchange method) and phosgene method (interfacial polymerization method), but any of these methods is merely capable of producing a crude polycarbonate resin which contains volatile impurities such as unreacted starting materials, low-molecular weight products and reaction solvent. A typical example of the said low-molecular weight products is phenols in the melting method. In the melting method, the phenols produced from the ester exchange reaction are evaporated away under reduced pressure, but as a result of equilibration between the liquid and gaseous phases of the reaction, phenols are left in the reaction solution and consequently contained in the produced polycarbonate resin.

The following methods have been known for producing the polycarbonate resins by removing the volatile impurities: a method in which when, for instance, a polycarbonate resin is melted and extruded into pellets, nitrogen or water is supplied to the material mixing section of the melt extruder to conduct treatment under reduced pressure (Patent Documents 1 and 2); a method in which a saturated aliphatic hydrocarbon or an aromatic hydrocarbon is added (Patent Documents 3 and 4); a method in which carbon dioxide is supplied in a pressurized state and the treatment is conducted under reduced pressure (Patent document 5); and a method in which by using a multi-stage vented melt extruder, a polycarbonate resin and water are mixed under a reduced pressure of 0.3 to 10 MPa to conduct treatment under reduced pressure (Patent Document 6). US 5 525 701 A discloses a process to prepare polycarbonate comprising steps of filtering the polymer before feeding it to a vented twinscrew extruder or after extruding before feeding it to an extruder where additives are compounded with the polymer. The use of particular temperature ranges in the extruder has not been taught.

Patent Document 1: Japanese Patent Application Laid-Open (KOKAI) No. 9-59367
Patent Document 2: Japanese Patent Application Laid-Open (KOKAI) No. 9-59368
Patent Document 3: Japanese Patent Application Laid-Open (KOKAI) No. 9-67433
Patent Document 4: Japanese Patent Application Laid-Open (KOKAI) No. 9-157375
Patent Document 5: Japanese Patent Application Laid-Open (KOKAI) No. 2000-302879
Patent Document 6: Japanese Patent Application Laid-Open (KOKAI) No. 2001-31753

### Disclosure of the Invention

### Problem to be Solved by the Invention

An object of the present invention is to provide a process for producing polycarbonate resins phenomenally reduced in content of volatile impurities such as phenols.

### Means for Solving the Problem

In the course of studies for resolving the above problem, the present inventors came upon the surprising findings accounted below.

(1) In the production of polycarbonate resins in general, a polymer filter is provided at the exit of the melt extruder in the pelletization step for the purpose of removing the foreign substances such as fish eyes. In this step, on the other hand, phenols are regenerated in the polymer filter. Such regeneration of phenols is associated with the catalytic action of the component metals of the polymer filter and the decomposition of the carbonic acid diesters or the polymer by shearing heat in the polymer filter. Therefore, even if a vented melt extruder is used for removing the volatile impurities, the polymer filter is incapable of fully performing its capacity in removing phenols which are left as volatile impurities in the product, making it hardly possible to produce a polycarbonate resin reduced in phenol content to a satisfactory level.

(2) In producing a polycarbonate resin from a dihydroxyl compound and a carbonic acid diester by an ester exchange

method using a polycarbonate resin producing apparatus comprising at least one reactor and at least one extruder, if a specific temperature condition is employed for the extruder, it is possible to suppress the polycarbonate resin decomposition reaction to allow effective removal of volatile impurities, and moreover, there can be obtained a novel polycarbonate resin that has been unknown in the art to date.

The present invention has been attained as a result of further studies on the basis of the above findings, and is embodied as follows.

According to the present invention, there is provided a process for producing a polycarbonate resin from a dihydroxyl compound and a carbonic acid diester by an ester exchange method using a polycarbonate resin producing apparatus comprising at least one reactor and at least one extruder, in which when the extruder inlet resin temperature is represented by T1 (°C) and the extruder outlet resin temperature by T2 (°C), T2 is not higher than 370°C, and ΔT given by the following equation (I) is not higher than 70°C:

$$\Delta T = T2 - T1 \qquad (I)$$

Effect of the Invention

According to the present invention, there is provided a process for producing polycarbonate resins which are extremely lessened in content of volatile impurities such as phenols.

Best Mode for Carrying out the Invention

A detailed account of the present invention is given below.

First, for the convenience of explanation, the process of the present invention for producing the polycarbonate resins is described.

In the present invention, a polycarbonate resin is produced by an ester exchange method from a dihydroxyl compound and a carbonic acid diester. Use of an ester exchange method makes it possible to obtain the polycarbonate resins regulated in the amount of terminal OH groups.

The dihydroxyl compounds that can be used as a starting material in the present invention include, for example, bis(hydroxyaryl)alkanes such as 2,2-bis(4-hydroxyphenyl)propane (aka bisphenol A), 2,2-bis(3,5-dibromo-4-hydroxyphenyl)propane (aka tetrabromobisphenol A), bis(4-hydroxyphenyl)methane, 1,1-bis(4-hydroxyphenyl)ethane, 2,2-bis(4-hydroxyphenyl)butane, 2,2-bis(4-hydroxyphenyl)octane, 2,2-bis(4-hydroxy-3-methylphenyl)propane, 1,1-bis(3-tert-butyl-4-hydroxyphenyl)propane, 2,2-bis(4-hydroxy-3,5-dimethylphenyl)propane, 2,2-bis(3-bromo-4-hydroxyphenyl)propane, 2,2-bis(3,5-dichloro-4-hydroxyphenyl)propane, 2,2-bis(3-phenyl-4-hydroxyphenyl)propane, 2,2-bis(3-cyclohexyl-4-hydroxyphenyl)propane, 1,1-bis(4-hydroxyphenyl)-1-phenylethane, bis(4-hydroxyphenyl)diphenylmethane, 2,2-bis(4-hydroxyphenyl)-1,1,1-trichloropropane, 2,2-bis(4-hydroxyphenyl)-1,1,1,3,3,3-hexachloropropane, and 2,2-bis(4-hydroxyphenyl)-1,1,1,3,3,3-hexafluoroproapne; bis(hydroxyaryl)cycloalkanes such as 1,1-bis(4-hydroxyphenyl)cyclopentane, 1,1-bis(4-hydroxyphenyl)cyclohexane, and 1,1-bis(4-hydroxyphenyl)-3,3,5-trimethylcyclohexane; bisphenols having a cardo structure such as 9,9-bis(4-hydroxyphenyl)fluorene, and 9,9-bis(4-hydroxy-3-methylphenyl)fluorene; dihydroxydiaryl ethers such as 4,4'-dihydroxydiphenyl ether, and 4,4'-dihydroxy-3,3'-dimethyldihenyl ether; dihydroxydiaryl sulfides such as 4,4'-dihydroxydiphenyl sulfide, and 4,4'-dihydroxy-3,3'-dimethyldiphenyl sulfide; dihydroxydiaryl sulfoxides such as 4,4'-dihydroxydiphenyl sulfoxide, and 4,4'-dihydroxy-3,3'-dimethyldiphenyl sulfoxide; dihydroxydiaryl sulfones such as 4,4'-dihydroxydiphenyl sulfone, and 4,4'-dihydroxy-3,3'-dimethyldiphenyl sulfone; hydroquinone, resorcin, 4,4'-dihydroxydiphenyl, and the like. Of these compounds, bis(4-hydroxyphenyl)alkanes are preferred, and bisphenol A is especially preferred in terms of impact resistance. The compounds obtained by combining one or more tetraalkylphosphonium sulfonates with the above-mentioned dihydroxyl compounds can also be used for the purpose of improving flame retardancy. These dihydroxyl compounds may be used by combining two or more of them.

In the melting method, it is possible to obtain a branched polycarbonate resin by properly adjusting the reaction temperature and the amount of the catalyst used. Also, as part of the dihydroxyl compounds, there can be used the polyhydroxyl compounds such as fluoroglucine, 4,6-dimethyl-2,4,6-tris(4-hydroxyphenyl)heptene, 2,4,6-dimethyl-2,4,6-tris(4-hydroxyphenyl)heptane, 2,6-dimethyl-2,4,6-tris(4-hydroxyphenyl)heptene, 3,1,3,5-tris(4-hydroxyphenyl)benzene, and 1,1,1-tri(4-hydroxyphenyl)ethane; 3,3-bis(4-hydroxyaryl)oxyindole (aka isatinbisphenol), 5-chloroisatin, 5,7-dichloroisatin, 5-bromoisatin and the like as a branching agent.

As the carbonic acid diesters to be used as another starting material, the compounds represented by the following general formula (a) can be cited as examples.

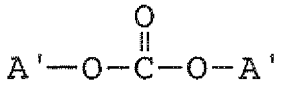 (a)

In the above-shown formula (a), A' is a linear, branched or cyclic monovalent hydrocarbon group with a carbon number of 1 to 10, which may be substituted. The two A's may be identical or different from each other. Examples of the substituents of A' are halogen atoms, C1-10 alkyl groups, C1-10 alkoxy groups, phenyl groups, phenoxy groups, vinyl groups, cyano groups, ester groups, amide groups and nitro groups.

Exemplary of the carbonic acid diesters are diphenyl carbonate, substituted diphenyl carbonates such as ditolyl carbonate, and dialkyl carbonates such as dimethyl carbonate, diethyl carbonate and di-t-butyl carbonate. Among these diesters, diphenyl carbonate (which may hereinafter be abbreviated as DPC) and substituted diphenyl carbonate are preferred. These carbonic acid diesters may be used as a mixture of two or more of them.

The said carbonic acid diesters may be partially substituted with dicarboxylic acids or dicarboxylic acid esters at a rate of usually not more than 50 mol%, preferably not more than 30 mol%. Typical examples of the dicarboxylic acids and dicarboxylic acid esters are terephthalic acid, isophthalic acid, diphenyl terephthalate and diphenyl isophthalate. When the carbonic acid diesters are substituted with these dicarboxylic acids or dicarboxylic acid diesters, polyester carbonates can be obtained.

In the ester exchange method, a dicarboxylic acid diester (which includes the above-mentioned substituted dicarboxylic acids and dicarboxylic acid esters, and this holds good throughout the following description) is used in excess of the dihydroxy compound. More definitely, the ratio (molar ratio) of the carboxylic acid diester to the dihydroxy compound is usually in the range from 1.00 to 1.30, preferably from 1.01 to 1.20, more preferably from 1.03 to 1.20. When this molar ratio is too small, there is seen a tendency for the terminal OH groups of the produced polycarbonate resin to increase, resulting in deterioration of thermal stability of the produced resin. On the other hand, if the said molar ratio is too high, there arises a decreasing tendency of the ester exchange reaction rate, making it hard to produce a polycarbonate resin having a desired molecular weight. Also, in this case, the residual amount of the carbonic acid diester in the resin increases, which may cause issuance of offensive smell during molding of the resin or after it was molded into a product. Generally, it is possible to obtain a polycarbonate having a desired molecular weight and a desired amount of terminal hydroxyl groups by adjusting the carbonic acid diester and dihydroxy compound mixing ratio and the degree of reduction of pressure in the reaction. As a more positive method, it is known to add a terminal stopper separately in the course of the reaction. As such a terminal stopper, monovalent phenols, monovalent carboxylic acids, carbonic acid diesters and the like can be used. The amount of the terminal hydroxyl groups exerts a great influence to thermal stability, hydrolytic stability, color tone and other qualities of the product polycarbonate. The amount of the terminal hydroxyl groups, although variable depending on the purpose of use of the product, is usually not more than 1,000 ppm, preferably not more than 700 ppm, for providing the product with practical properties.

Usually, an ester exchange catalyst is used in the ester exchange method. The ester exchange catalyst used in the present invention is not specifically defined, but the alkaline metal compounds and/or alkaline earth metal compounds are preferably used. It is also possible to use therewith the basic compounds such as basic boron compounds, basic phosphorus compounds, basic ammonium compounds and amine type compounds as an adjunct. Of these ester exchange catalysts, the alkaline metal compounds are preferred from the viewpoint of practicality. These ester exchange catalysts may be used as a combination of two or more of them. The amount of the ester exchange catalyst(s) used in the present invention is in the range usually from $1 \times 10^{-9}$ to $1 \times 10^{-1}$ preferably from $1 \times 10^{-7}$ to $1 \times 10^{-3}$, more preferably from $1 \times 10^{-7}$ to $1 \times 10^{-5}$.

The alkaline metal compounds usable as the ester exchange catalyst in the present invention include the inorganic alkaline metal compounds such as hydroxides, carbonates and hydrogencarbonates of alkaline metals, and the organic alkaline metal compounds such as salts with alcohols (or phenols) and organocarboxylic acids of alkaline metals. The alkaline metals referred to herein include, for instance, lithium, sodium, potassium, rubidium and cesium. Of these alkaline metal compounds, the cesium compounds, especially cesium carbonate, cesium hydrogencarbonate and cesium hydroxide are preferred.

The ester exchange reaction of a dihydroxy compound and a carbonic acid diester can be carried out according to the following process.

First, as a step for preparing the starting mixture, a mixed molten solution of the starting materials is prepared in an atmosphere of an inert gas such as nitrogen or argon by using the batch-type, half-batch-type or continuous agitators. When, for instance, bisphenol A is used as the dihydroxy compound and diphenyl carbonate as the carbonic acid diester, the melt mixing temperature is selected from the range usually from 120 to 180°C, preferably from 125 to 160°C.

Then, as a step for polycondensation, an ester exchange reaction between a dihydroxy compound and a carbonic acid diester is carried out. This ester exchange reaction is conducted continuously, usually in two or more stages, preferably in a 3 to 7 multi-stage scheme. The specific reaction conditions for each agitator are 150 to 320°C,

normal to reduced pressure (0.01 Torr, 1.3 Pa), and 5 to 150 minutes in average residence time.

In each multi-stage reactor, in order to efficiently remove phenols formed as a by-product with the progress of the polycondensation reaction out of the system, the temperature and the degree of vacuum are increased stepwise within the above-defined range of reaction conditions, with the final degree of vacuum reaching 2 Torr (266.6 Pa) or below. This makes it possible to carry out the melt polycondensation reaction while removing the by-products such as the aromatic hydroxyl compounds. For preventing degradation of quality such as hue of the produced polycarbonate resin, it is expedient to keep the temperature as low and residence time as short as they can be within the above-defined limitation.

As the deactivator of the catalyst in the polycarbonate obtained from the ester exchange reaction, the compounds capable of neutralizing the catalyst used, for example, the sulfur-containing acidic compounds or their derivatives can be used. The catalyst-neutralizing compound is used in an amount of usually 0.5 to 10 equivalents, preferably 1 to 5 equivalents to the alkaline metal contained in the catalyst. Also, the ratio of the catalyst-neutralizing compound to the polycarbonate is in the range usually from 1 to 100 ppm, preferably from 1 to 20 ppm.

The viscosity-average molecular weight of the product polycarbonate resins, though not specifically defined, usually falls within the range from 13,000 to 30,000, preferably from 20,000 to 30,000, more preferably from 23,000 to 30,000. If the viscosity-average molecular weight exceeds 30,000, fluidity in the molding operation may deteriorate, and if it is less than 13,000, workability may be impaired. The viscosity-average molecular weight shown here is the value determined based on the solution viscosity measured at 20°C using methylene chloride as solvent.

<Production method>

The present invention provides a process for producing a polycarbonate resin from a dihydroxy compound and a carbonic acid diester by their ester exchange, by using a polycarbonate resin producing apparatus comprising at least one reactor and at least one extruder, characterized in that when the extruder inlet resin temperature is expressed by T1 (°C) and the extruder outlet resin temperature by T2 (°C), T2 is not higher than 370°C, and ΔT given by the following equation (I) is not higher than 70°C:

$$\Delta T = T2 - T1 \qquad (I)$$

In the case of the producing apparatus comprising one extruder, T1 and T2 indicate the inlet resin temperature (final reactor outlet resin temperature) and the outlet resin temperature, respectively, of that one extruder, and in the case of the producing apparatus comprising two extruders, T1 and T2 indicate the first extruder inlet resin temperature (final reactor outlet resin temperature) and the second extruder outlet resin temperature, respectively.

When the extruder outlet resin temperature T2 exceeds 370°C or ΔT is over 70°C, removal of the volatile components becomes difficult. This is considered attributable to the pyrolysis of the polycarbonate resin and/or decomposition of the starting materials. The extruder outlet resin temperature T2 is preferably in the range from 250 to 350°C, and ΔT given by the above-shown equation (I) is preferably not higher than 50°C.

In the present invention, for the same reason as stated above, the difference between the maximum preset temperature (Tmax) and the minimum preset temperature (Tmin) of the barrel in the said extruder is one that satisfies the following equation (II):

$$Tmax - Tmin = 40 - 120°C \qquad (II)$$

In the above equation (II), Tmin is preferably in the range from 200 to 240°C, and the difference between the maximum preset temperature (Tmax) and the minimum preset temperature (Tmin) is preferably in the range from 60 to 220°C.

In the present invention, it is preferable that at least one of the extruders is a vented melt extruder, and it is more preferable that the final one of the extruders is a vented melt extruder. The type of the vented melt extruder is not specified; it may be a single screw or multiple screw type extruder, and it is also possible to employ a suitable screw revolution type such as opposite-direction screw revolution type, partially intermeshed opposite-direction screw revolution type, etc. The number of the vents is not restricted and may be properly selected from the range from 1 to 10.

For carrying out melt extrusion for devolatilization by using a vented melt extruder, the following two modes of practice (i) and (ii) are recommended.

(i) In case where no polymer filter treatment is conducted after devolatilization melt extrusion of the resin, devolatilization melt extrusion is carried out under the conditions that the extruder outlet resin temperature T2 satisfies the formula (1), and that the peripheral speed (m/min) of the extruder screw satisfies the formula (2). The peripheral speed of the screw given in the formula (2) is the peripheral speed at the largest outer diameter portion of the screw.

$$295 \times [\eta]^{0.1} \leq T2 \leq 340 \times [\eta]^{0.1} \qquad (1)$$

$$T2/40 \leq V \leq T2/5 \qquad (2)$$

(In the above formula (1), [η] indicates the intrinsic viscosity of the polycarbonate resin measured as a methylene chloride solution (polycarbonate resin concentration: 0.6 g/dL) at 20°C by an Ubbellohde viscometer.)

Formula (1) is an empirical formula which defines the extruder outlet resin temperature (molten resin temperature) used in the present invention by the extruder outlet resin temperature (molten resin temperature) and the intrinsic viscosity (a function of viscosity-average molecular weight) of the polycarbonate resin. This formula has the following significance.

The extruder outlet resin temperature needs to be properly selected in accordance with intrinsic viscosity of the molten resin flowing through the extruder. It has been generally considered that by setting the extruder outlet resin temperature so that it will become higher proportionally to the viscosity, it would be possible to better miscibility with the additives and to realize effective removal of the volatile components. The results of many experiments, however, revealed quite unexpectedly the fact that the removal of volatile components is rather hindered when the extruder outlet resin temperature exceeds a certain mark. This is considered due to pyrolysis of the polycarbonate resin and/or decomposition of the starting materials. On the other hand, when the extruder outlet resin temperature is below a certain level, it not only becomes difficult to remove the volatile components as a result of a rise of melt viscosity of the resin, but there also takes place a hike of cylinder supply pressure or even crystallization. Thus, the above-shown formula (1) is an empirical formula indicating the optimal range of relation between the extruder outlet resin temperature and the intrinsic viscosity of the polycarbonate resins, which was elaborated on the basis of various phenomena such as mentioned above.

Formula (2) indicates that the peripheral speed V of the extruder screw needs to be properly selected in conformity to the extruder outlet resin temperature (T) defined by the formula (1). When the peripheral speed V of the extruder screw is below the range defined by the formula (2), it becomes difficult to remove the volatile components, while when it exceeds the range defined by the formula (2), the shearing stress exerted to the resin builds up exceedingly, resulting in a rise of resin temperature to cause pyrolysis of the polycarbonate resin and/or decomposition of the starting materials like in the previous case, rather hindering removal of the volatile components.

In the case of (i) described above, the preferred range of extruder outlet resin temperature T2 (°C) is as defined by the following formula (10), and the preferred range of peripheral speed V (m/min) of extruder screw is as defined by the formula (20):

$$295 \times [\eta]^{0.1} \leq T2 \leq 320 \times [\eta]^{0.1} \qquad (10)$$

$$T2/30 \leq V \leq T2/5 \qquad (20)$$

(In the above formula (10), [η] has the same meaning as [η] in the formula (1)).

(ii) In case where devolatilization melt extrusion of resin is carried out plus a treatment by a polymer filter, the extruding operation is conducted under the conditions that the extruder outlet resin temperature T2 satisfies the following formula (3), and that peripheral speed V (m/min) of the extruder screw satisfies the formula (4):

$$295 \times [\eta]^{0.1} + 20 \leq T2 \leq 340 \times [\eta]^{0.1} + 20 \qquad (3)$$

$$T2/40 \leq V \leq T2/5 \qquad (4)$$

(In the above formula (3), [η] has the same meaning as [η] in the formula (1)).

The technical meanings of the formulae (3) and (4) are the same as those of the afore-shown formulae (1) and (2). It is necessary to elevate the extruder outlet resin temperature for preventing the rise of pressure loss experienced in the polymer filter treatment, and naturally the allowable conditions differ from those required in case where no polymer filter treatment is conducted.

In the case of (ii), the preferred range of extruder outlet resin temperature T2 (°C) is as defined by the following formula (30), and the preferred range of peripheral speed V (m/min) of the extruder screw is as defined by the formula (40):

$$310 \times [\eta]^{0.1} + 20 \leq T2 \leq 340 \times [\eta]^{0.1} + 20 \qquad (30)$$

$$T2/30 \leq V \leq T2/5 \qquad (40)$$

(In the above formula (30), [η] has the same meaning as [η] in the formula (1)).

The polymer filter used in the present invention is a filter capable of removing the foreign substances existing in the polycarbonate resins. It is possible to use various known types of filter such as candle type, pleat type, leaf disc type, etc., but a leaf disc type polymer filter is especially preferred. The leaf disc type usually comprises one or more disc-shaped woven wire gauzes with various wire sizes and openings, said wire gauzes being placed one over another in layers. The types of weave usable in the present invention include, for instance, plain weave, twilling, plain dutch weave, and twilled dutch weave. The gauze may be nonwoven. As for the gauze material, usually stainless steel materials such as SUS-316 and SUS-316L are used, but it is also possible to use sintered metals and resins. The absolute filtration precision required in the present invention is usually 0.5 to 50 μm, preferably 0.5 to 20 μm.

In the present invention, water can be used as a devolatilization assistant. The water supplied to the extruder is not subject to any specific restrictions as far as it does not affect the properties of the polycarbonate resins, but use of water with a low electric conductivity, usually not higher than 1 mS/cm, preferably not higher than 1 μS/cm, is preferred. The amount of water to be supplied to the extruder is usually 5 to 5,000 ppm, preferably 5 to 3,000 ppm, more preferably 5 to 2,000 ppm, based on the polycarbonate resin.

The polycarbonate resin obtained from the process of the present invention is usually made into pellets by a conventional method. In case of using cooling water in cooling and cutting of the polycarbonate resin for forming its pellets, electric conductivity of such cooling water is preferably as low as possible, which, as in the previous case, is usually not higher than 1 mS/cm, preferably not higher than 1 μS/cm.

According to the present invention, it is possible to produce the polycarbonate resins which are remarkably reduced in content of volatile impurities. In these polycarbonate resins, most significantly, the content of aromatic monohydroxy compounds and the content of aromatic dihydroxy compounds are both usually not more than 20 ppm, particularly the former being preferably not more than 10 ppm.

<Aromatic polycarbonate resins>

Now, the aromatic polycarbonate resins obtainable by the process of the present invention are explained.

The aromatic polycarbonate resins are produced by an ester exchange reaction of aromatic dihydroxy compounds and carbonic acid diesters, and satisfy the following conditions:

(1) the viscosity-average molecular weight is 13,000 to 30,000;
(2) the amount of the aromatic monohydroxy compound and the amount of the aromatic dihydroxy compound left in the produced resins are each not more than 20 ppm; and
(3) they contain at least one of the structural units of the following formulae (1) to (5), with the total amount of such structural units being 1,000 to 6,000:

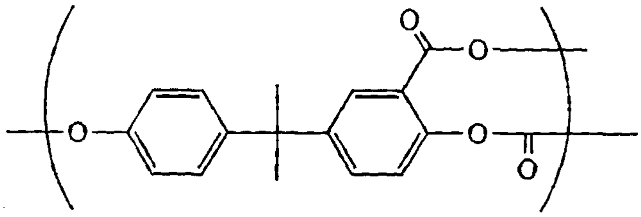

(1)

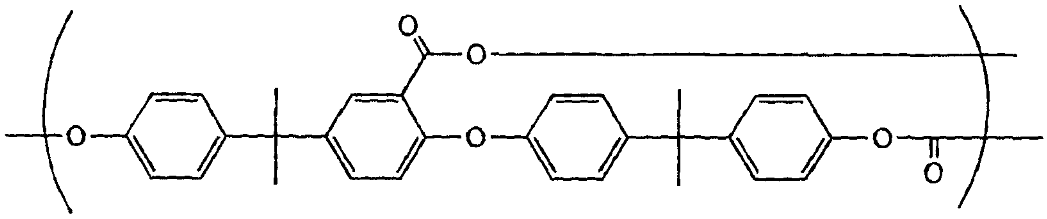

(2)

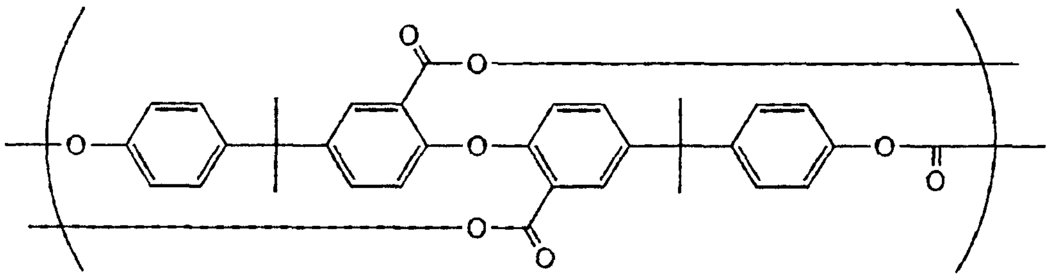

(3)

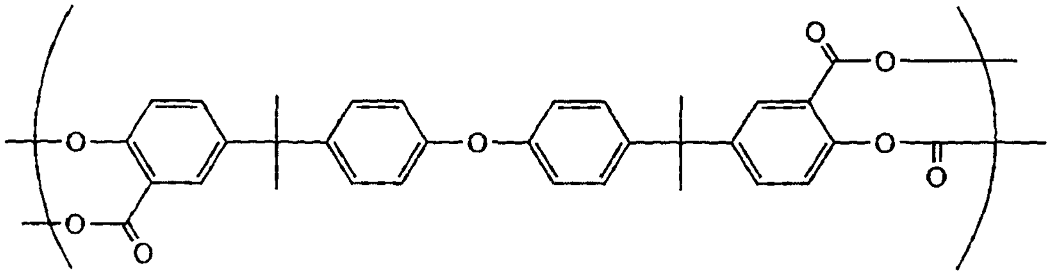

(4)

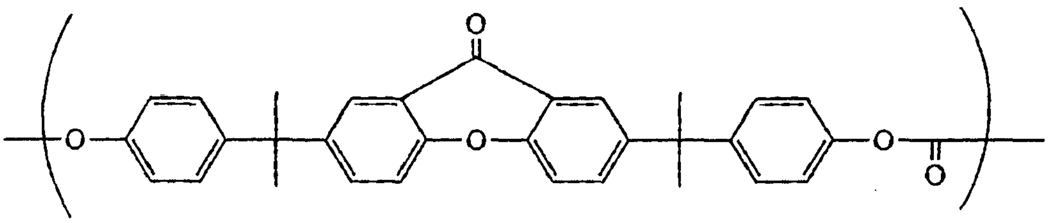

(5)

The viscosity-average molecular weight of the aromatic polycarbonate resins is 13,000 to 30,000, preferably 20,000 to 30,000, more preferably 23,000 to 30,000. The method for determining the viscosity-average molecular weight and the meaning of the defined range of values are the same as stated before.

The residues of the aromatic monohydroxy compound and the aromatic dihydroxy compound in the resins are each not more than 20 ppm, particularly the former is preferably not more than 10 ppm. With these conditions satisfied, the aromatic polycarbonate resins are provided with good properties such as high thermal stability in molding.

The total amount of the said structural units in the aromatic polycarbonate resins is 1,000 to 6,000 ppm, preferably 2,500 to 5,500, more preferably 3,000 to 5,500. When the total amount of the structural units is less than 1,000 ppm, there may take place, for instance, drooling in blow molding, and when it exceeds 6,000 ppm, the produced resins prove unsatisfactory in fluidity. The method for determining the said structural units will be explained in the Examples given later.

The aromatic polycarbonate resins can be obtained by the above-described method using a polycarbonate

resin producing apparatus comprising at least one reactor and at least one extruder.

The content of the said structural units in the aromatic polycarbonate resins can be adjusted by properly selecting the conditions of the ester exchange reaction of an aromatic dihydroxy compound and a carbonic acid diester. The recommended conditions of the ester exchange reaction are as stated below.

The amount of the catalyst used in ester exchange and the temperature (internal temperature) of the final reactor are the important factors in forming a specified amount of any of the structural units (1) to (5). The amount of the catalyst is selected from the range of usually $1 \times 10^{-7}$ to $1 \times 10^{-3}$ moles, preferably $1 \times 10^{-7}$ to $1 \times 10^{-5}$ moles, to one mole of the dihydroxy compound. The temperature of the final reactor is selected from the range of usually 260 to 300°C, preferably 270 to 290°C.

The obtained resin is supplied to an extruder and therein subjected to melt extrusion for removal of volatiles. By conducting this devolatilization melt extrusion at a specific temperature, it is possible to remove the volatile impurities alone, and the structural units formed in the ester exchange reaction can be maintained in the above-defined ranges of content without incurring any substantial damage.

In the polycarbonate resins, various known additives, such as other types of thermoplastic resin, flame retardant, impact resistance improver, antistatic agent, slip agent, anti-blocking agent, lubricant, anti-fogging agent, natural oil, synthetic oil, wax, organic filler, inorganic filler, etc., may be properly incorporated according to the purpose of use of the product resin.

The polycarbonate resins find useful application to the construction materials such as sheeting, containers such as water bottle, head lamp lens for automobiles, optical lens for glasses, optical recording materials such as optical disc, photoconductive plates such as liquid crystal display, and such.

EXAMPLES

The present invention will be described in further detail with reference to the embodiments thereof, but it should be understood that the present invention is not limited to these embodiments but can as well be embodied in other forms without departing from the scope of the present invention. Analyses of the polycarbonate resins were made in the following way.

(1) Viscosity-average molecular weight (Mv):

Intrinsic viscosity [η] was measured in a methylene chloride solution at 20°C using a Ubbellohde viscometer, and viscosity-average molecular weight (Mv) was determined according to the following equation.

$$[\eta] = 1.23 \times 10^{-4} \times (Mv)^{0.83}$$

(2) Concentration of terminal hydroxyl groups:

0.1 g of resin was dissolved in 10 ml of methylene chloride, to which 5 ml of a 5% methylene chloride solution of acetic acid (special grade, produced by Wako Pure Chemicals Co., Ltd.) and 10 ml of a 2.5% methylene chloride solution of titanium tetrachloride (special grade, produced by Wako Pure Chemicals) to develop color, and the absorbance was determined at 546 nm using a spectrophotometer (Model UV160 mfd. by Hitachi Corp.). Separately from the above, extinction coefficient was determined using a methylene chloride solution of divalent phenol used in producing the resin, from which the concentration of OH groups in the sample was determined.

(3) Amount of residual monomers:

1.2 g of resin was dissolved in 7 ml of methylene chloride, to which 23 ml of acetone was added with stirring to cause reprecipitation. The supernatant was subjected to liquid chromatography (LC-10AT mfd. by Shimadzu Corp.; column: MCI GEL ODS (5 μm), 4.6 mmID x 150 mmL; detector: UV 219 nm; eluent: acetonitrile/water = 4/6 by volume) to determine the amount of residual phenol, the amount of residual bisphenol A (BPA) and the amount of residual diphenyl carbonate (DPC) in the resin.

(4) Amount of foreign matter:

The resin pellets were dried in a nitrogen atmosphere at 120°C for more than 6 hours and worked into a 70 μm thick film by a 30 mm single crew extruder (mfd. by Isuzu Chemical Industries Co., Ltd.). The 90 cm x 50 cm pieces

(about 4 g per piece) were cut out from the film as samples, and they were observed under a stereo microscope, marking the transparent foreign matter (fish eyes) having no nucleus. The number of the fish eyes having a size of 10 μm or greater was counted and shown as the number of foreign matter per gram of the resin.

(5) Determination of structural units (1) to (5):

0.5 g of polycarbonate was precisely weighed into a flask and dissolved in 5 ml of methylene chloride. To this solution, 45 ml of methanol and 5 ml of a 25 wt% sodium hydroxide solution were added, and the mixture was stirred at 70°C for 30 minutes while conducting dry distillation by a condenser. After allowing the solution to cool by itself, the condenser was washed with 5 ml of methanol and the washings were added into the above solution. The mixed solution was adjusted to a pH of about 2 with 7 ml of 6N hydrochloric acid and then pure water was added to make the total amount of the solution 100 ml in a 100 ml volumetric flask.

20 μl of this solution was subjected to liquid chromatography (LC-10AD mfd. by Shimadzu Corp.; column: YMC-PackODS-AM AM-307-3, 4.6 mmID x 75 mml; detector: UV 280 nm; eluent: (A) 0.05% TFA solution/(B) methanol; gradient: 0 min (B = 40%) and 25 min (B = 95%)) to determine the amount of the structural units (1) to (5). Regarding the structural units (3) and (4), as it was impossible to make their perfectly independent determination because of overlapping of their peaks, they were determined as a combined content of the two.

<u>Example 1:</u>

An aromatic polycarbonate resin was produced by a continuous production apparatus comprising four vertical stirring reactors and one horizontal stirring reactor which were operated under the conditions shown below:

First vertical stirring reactor: 220°C, 13.3 kPa
Second vertical stirring reactor: 240°C, 2 kPa
Third vertical stirring reactor: 270°C, 67 Pa
Fourth vertical stirring reactor: 270°C, 67 Pa
Fifth horizontal stirring reactor: 270°C, 67 Pa

First, in the starting material preparation step, bisphenol A (BPA) and diphenyl carbonate (DPC) were mixed at a specified molar ratio (DPC/BPA = 1.030) and heated at 140°C under a nitrogen gas atmosphere to obtain a mixed molten solution of starting materials. Then this solution was supplied continuously into the first stirring reactor through a starting material feed pipe heated to 140°C. The liquid level was maintained constant while controlling the opening of the valve provided in the polymer discharge line at the bottom of the reactor so that the average residence time would stay at 60 minutes. Simultaneously with start of the supply of said mixed solution of starting materials, a cesium carbonate solution was supplied continuously as a catalyst into the first vertical stirring reactor from a catalyst feed pipe at a rate of 1 μmol to one mole of bisphenol A.

The polymerization reaction solution discharged from the bottom of the first vertical stirring reactor was successively supplied into the second vertical stirring reactor, the third vertical stirring reactor, the fourth vertical stirring reactor and the fifth horizontal stirring reactor. During the polymerization reaction, the liquid level was controlled so that the average residence time in each reactor would become 60 minutes, and the phenols formed as by-products in the polymerization reaction were evaporated away. The production rate of the aromatic polycarbonate resin was 15 kg/hr. The thus obtained aromatic polycarbonate resin had the following specificities: viscosity-average molecular weight = 25,800; content of bisphenol A = 24 ppm; content of diphenyl carbonate = 39 ppm: content of phenol = 33 ppm; content of structural unit (1) = 1,754 ppm; content of structural unit (2) = 1,286 ppm, total content of structural units (3) and (4) = 1,092 ppm; content of structural unit (5) = 145 ppm.

Then the above aromatic polycarbonate resin was supplied to an extruder connected to the fifth horizontal stirring reactor and subjected to devolatilization melt extrusion in the manner specified below.

The above aromatic polycarbonate resin was supplied to a double screw extruder JSW TEX30 mfd. by Japan Steel Works, Ltd. (the largest diameter portion of the screw: 30 mm) at a rate of 12.5 kg/hr and pelletized. The extruder operating conditions were as follows: extruder inlet (fifth horizontal reactor outlet) resin temperature = 270°C; extruder outlet resin temperature = 284°C; screw revolution = 100 rpm (peripheral speed = 9 m/min); degree of vacuum = 60 Pa. The strand of resin discharged from the extruder die was cooled and cut into pellets. The thus obtained resin pellets had a phenol content of 4 ppm and a bisphenol A content of 18 ppm. The contents of the structural units (1) to (5) were the same as mentioned before.

The amount of the monomers was determined in the following way. 1.2 g of the polymer was dissolved in 7 ml of methylene chloride, to which 23 ml of acetone was added with stirring to cause reprecipitation, and the supernatant solution was subjected to liquid chromatography (LC-10AT mfd. by Shimadzu Corp.; column: MCI GEL ODS, 5 μm, 4.6

mmID x 150 mml; detector: UV 219 nm; eluent: acetonitrile/water = 4/6) to thereby determine the amount of phenol and the amount of bisphenol A in the polymer.

Example 2:

The same procedure as defined in Example 1 was conducted except for the changes of the resin feed to the extruder to 15 kg/hr, extruder outlet resin temperature to 314°C, screw revolution to 150 rpm (peripheral speed: 14 m/min) and the degree of vacuum to 90 Pa. The phenol content and the bisphenol A content in the obtained resin pellets were 14 ppm and 17 ppm, respectively.

Comparative Example 1:

The same procedure as defined in Example 1 was conducted except for the changes of the resin feed to the extruder to 15 kg/hr, extruder outlet resin temperature to 342°C, screw revolution to 150 rpm (peripheral speed: 14 m/min) and the degree of vacuum to 90 Pa. The obtained resin pellets had a phenol content of 24 ppm and a bisphenol A content of 18 ppm.

The results of the above-described Examples 1 and 2 and Comparative Example 1 are shown collectively in Table 1 along with the melt extrusion conditions.

Table 1

| | Example 1 | Example 2 | Comp. Example 1 |
|---|---|---|---|
| Extruder inlet resin temperature (°C) | 270 | 270 | 270 |
| Extruder outlet resin temperature (°C) | 284 | 314 | 342 |
| Range of temperature (°C) of formula (1) specified in the specification | 279 - 321 | | |
| Temperature applied (°C) | 284 | 314 | 342 |
| Range of peripheral speed (m/min) of formula (2) specified in the specification | 7 - 57 | 8 - 63 | 9 - 68 |
| Peripheral speed applied (m/min) | 9 | 14 | 14 |
| Degree of vacuum (Pa) | 60 | 90 | 90 |
| Phenol content (ppm) | 4 | 14 | 24 |
| Bisphenol A content (ppm) | 18 | 17 | 18 |
| Content of structural unit (1) (ppm) | 1754 | | |
| Content of structural unit (2) (ppm) | 1286 | | |
| Total content of structural units (3) and (4) (ppm) | 1092 | | |
| Content of structural unit (5) (ppm) | 145 | | |

Example 3:

The same procedure as defined in Example 1 was conducted except that 4 pieces of leaf disc type polymer filter mfd. by Japan Pole Co., Ltd. (absolute filtration precision: 20 μm) were set at the outlet of the extruder, that the resin feed was changed to 15 kg/hr, that the extruder outlet resin temperature was changed to 340°C, that the screw revolution was changed to 150 rpm (peripheral speed: 14 m/min), that the degree of vacuum was changed to 60 Pa, and that water with an electric conductivity of 0.5 μS/cm was supplied to the extruder as a devolatilization assistant in an amount of 2,000 ppm based on the resin. The obtained resin pellets had a phenol content of 19 ppm and a bisphenol A content of 24 ppm.

Comparative Example 2

The same procedure as defined in Example 1 was conducted except that 4 pieces of leaf disc type polymer filter mfd. by Japan Pole Co., Ltd. (absolute filtration precision: 20 μm) were set at the extruder outlet, that the resin feed

was changed to 15 kg/hr, that the extruder outlet resin temperature was changed to 355°C, that the screw revolution was changed to 150 rpm (peripheral speed: 14 m/min) and that the degree of vacuum was changed to 90 Pa. The obtained resin pellets had a phenol content of 27 ppm and a bisphenol A content of 30 ppm.

The results of the above-described Example 3 and Comparative Example 2 are shown collectively in Table 2 along with the melt extrusion conditions.

Table 2

| | Example 3 | Comp. Example 2 |
|---|---|---|
| Extruder inlet resin temperature (°C) | 270 | 270 |
| Extruder outlet resin temperature (°C) | 340 | 355 |
| Range of temperature (°C) of formula(3) specified in the specification | 299 - 341 | |
| Temperature applied (°C) | 340 | 355 |
| Range of peripheral speed (m/min) of formula (4) specified in the specification | 9 - 68 | 9 - 71 |
| Peripheral speed applied (m/min) | 14 | 14 |
| Degree of vacuum (Pa) | 60 | 60 |
| Phenol content (ppm) | 19 | 27 |
| Bisphenol A content (ppm) | 24 | 30 |
| Content of structural unit (1) (ppm) | 1754 | |
| Content of structural unit (2) (ppm) | 1286 | |
| Total content of structural units (3) and (4) (ppm) | 1092 | |
| Content of structural unit (5) (ppm) | 145 | |

## Claims

1. A process for producing a polycarbonate resin from a dihydroxy compound and a carbonic acid diester by an ester exchange method using a polycarbonate resin producing apparatus comprising at least one reactor and at least one extruder, in which when the extruder inlet resin temperature is represented by T1 (°C) and the extruder outlet resin temperature by T2 (°C), T2 is not higher than 370°C, and ΔT given by the following equation (I) is not higher than 70°C:

$$\Delta T = T2 - T1 \qquad (I)$$

2. The process according to Claim 1, wherein the difference between the maximum preset temperature (Tmax) and the minimum preset temperature (Tmin) of the extruder barrel satisfies the following equation (II):

$$Tmax - Tmin = 40 \text{ to } 120°C \qquad (II)$$

3. The process according to Claim 2, wherein Tmin is 200 to 240°C.

4. The process according to any one of Claims 1 to 3, wherein at least one of said extruders is a vented melt extruder.

5. The process according to Claim 4, wherein the last one of said extruders is a vented melt extruder.

6. The process according to any one of Claims 1 to 5 using a devolatilization assistant in the extruders.

7. The process according to any one of Claims 1 to 6, wherein the viscosity-average molecular weight of the polycarbonate resin is 13,000 to 30,000.

**8.** The process according to Claim 7, wherein the aromatic polycarbonate resin satisfies the following conditions (1) and (2):

(1) the amount of the residual aromatic monohydroxy compound and the amount of the residual aromatic dihydroxy compound in the resin are each not more than 20 ppm; and
(2) the resin contains at least one of the structural units of the following formulae (1) to (5), with the total amount of such structural units being 1,000 to 6,000 ppm:

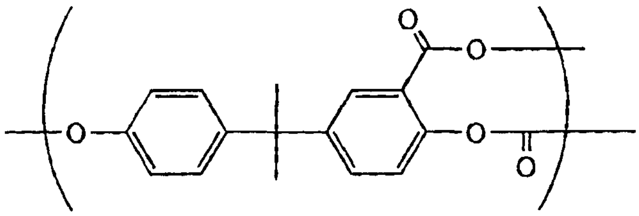
(1)

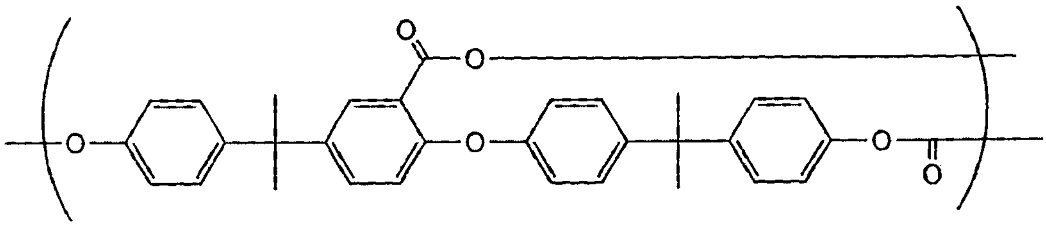
(2)

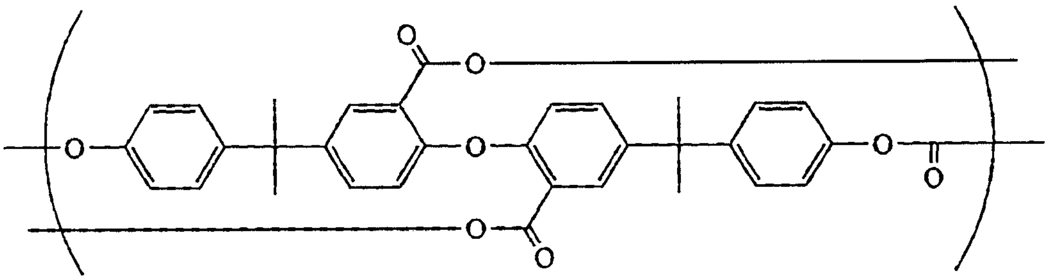
(3)

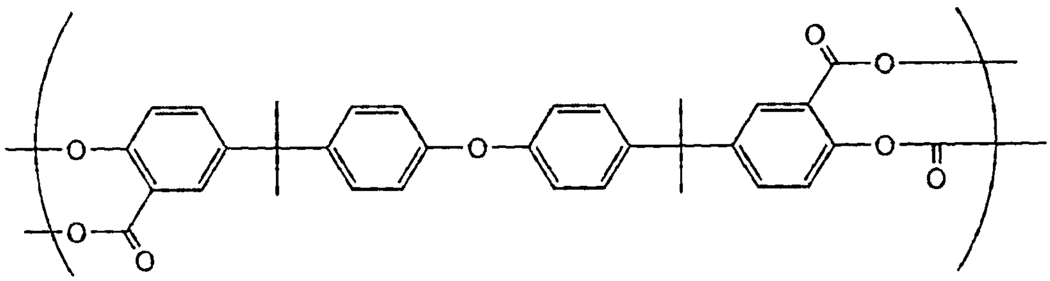
(4)

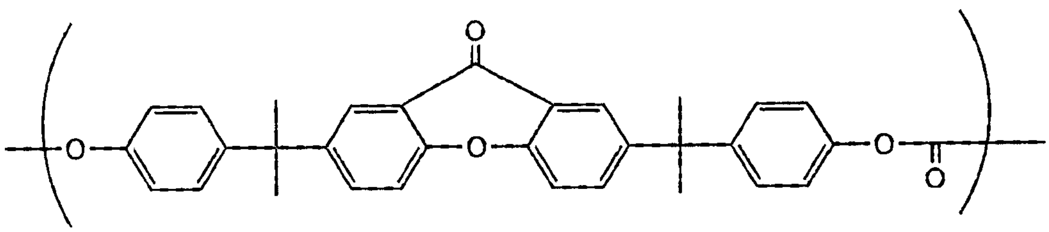
(5)

**Patentansprüche**

**1.** Verfahren zur Herstellung eines Polycarbonatharzes aus einer Dihydroxyverbindung und einem Carbonsäurediester

durch ein Esteraustauschverfahren unter Verwendung einer ein Polycarbonatharz produzierenden Vorrichtung, umfassend zumindest einen Reaktor und zumindest einen Extruder, wobei, wenn die Extrudereinlass-Harztemperatur durch T1 (°C) dargestellt ist und die Extruderauslass-Harztemperatur durch T2 (°C) dargestellt ist, T2 nicht höher als 370°C ist und ΔT, angegeben durch die nachstehende Gleichung (I), nicht höher als 70°C ist:

$$\Delta T = T2 - T1 \qquad (I).$$

2. Verfahren gemäss Anspruch 1, wobei der Unterschied zwischen der maximalen voreingestellten Temperatur (Tmax) und der minimalen voreingestellten Temperatur (Tmin) des Extruderzylinders der nachstehenden Gleichung (II) genügt:

$$Tmax - Tmin = 40 \text{ bis } 120°C \qquad (II)$$

3. Verfahren gemäss Anspruch 2, wobei Tmin 200 bis 240°C beträgt.

4. Verfahren gemäss irgendeinem der Ansprüche 1 bis 3, wobei zumindest einer der Extruder ein Schmelzextruder mit Entgasung ist.

5. Verfahren gemäss Anspruch 4, wobei der letzte der Extruder ein Schmelzextruder mit Entgasung ist.

6. Verfahren gemäss irgendeinem der Ansprüche 1 bis 5, das ein Entgasungshilfsmittel in den Extrudern verwendet.

7. Verfahren gemäss irgendeinem der Ansprüche 1 bis 6, wobei das viskositätsgemittelte Molekulargewicht des Polycarbonatharzes 13.000 bis 30.000 beträgt.

8. Verfahren gemäss Anspruch 7, wobei das aromatische Polycarbonatharz die nachstehenden Bedingungen (1) und (2) erfüllt:

(1) Die Menge der restlichen aromatischen Monohydroxyverbindung und die Menge der restlichen aromatischen Dihydroxyverbindung in dem Harz betragen jeweils nicht mehr als 20 ppm; und
(2) das Harz enthält zumindest eine der Struktureinheiten der nachstehenden Formeln (1) bis (5), wobei die Gesamtmenge dieser Struktureinheiten 1.000 bis 6.000 ppm beträgt:

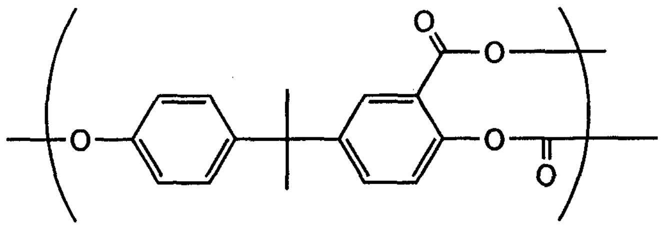

(1)

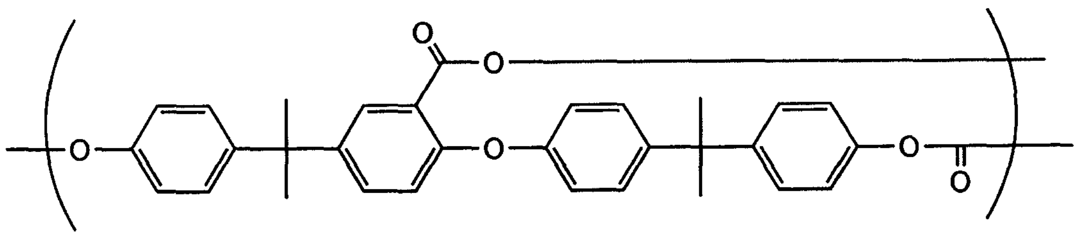

(2)

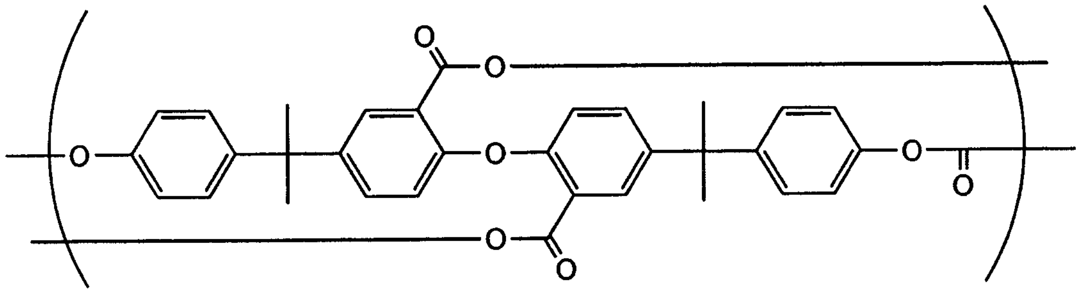

(3)

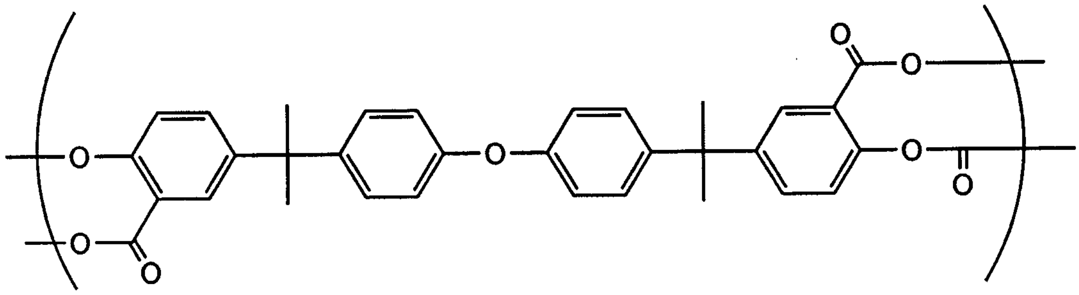

(4)

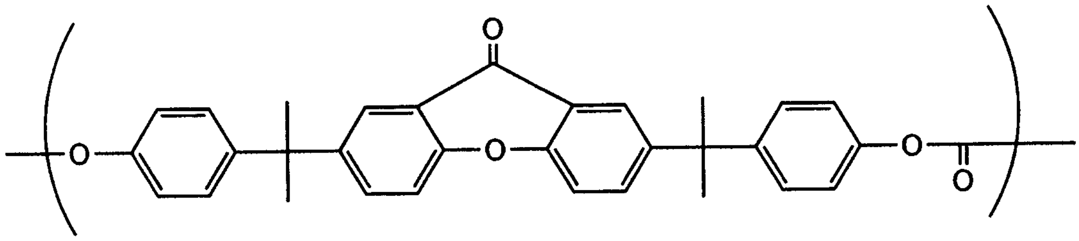

(5)

## Revendications

1. Procédé de production d'une résine de polycarbonate à partir d'un composé dihydroxy et d'un diester d'acide carbonique par un procédé d'échange d'ester utilisant un appareil de production de résine de polycarbonate comprenant au moins un réacteur et au moins une extrudeuse, dans lequel lorsque la température de la résine à l'entrée de l'extrudeuse est représentée par T1 (°C) et la température de la résine à la sortie de l'extrudeuse par T2 (°C), T2 n'est pas plus élevée que 370°C, et ΔT donné par l'équation (I) suivante n'est pas plus élevé que 70°C:

$$\Delta T = T2 - T1 \qquad (I)$$

2. Procédé selon la revendication 1, dans lequel la différence entre la température préréglée maximale (Tmax) et la température préréglée minimale (Tmin) du cylindre d'extrudeuse satisfait l'équation (II) suivante:

$$Tmax - Tmin = 40 \text{ à } 120°C \qquad (II)$$

3. Procédé selon la revendication 2, dans lequel Tmin est de 200 à 240°C.

4. Procédé selon l'une quelconque des revendications 1 à 3, dans lequel au moins l'une desdites extrudeuses est une extrudeuse à l'état fondu ventilée.

**5.** Procédé selon la revendication 4, dans lequel la dernière desdites extrudeuses est une extrudeuse à l'état fondu ventilée.

**6.** Procédé selon l'une quelconque des revendications 1 à 5 utilisant un assistant de dévolatilisation dans les extrudeuses.

**7.** Procédé selon l'une quelconques des revendications 1 à 6, dans lequel le poids moléculaire moyen en viscosité de la résine de polycarbonate est de 13 000 à 30 000.

**8.** Procédé selon la revendication 7, dans lequel la résine de polycarbonate aromatique satisfait les conditions (1) et (2) suivantes :

(1) la quantité du composé monohydroxy aromatique résiduel et la quantité du composé dihydroxy aromatique résiduel dans la résine sont chacune de pas plus de 20 ppm ; et
(2) la résine contient au moins une des unités structurelles des formules (1) à (5) suivantes, la quantité totale de ces unités structurelles étant de 1000 à 6 000 ppm :

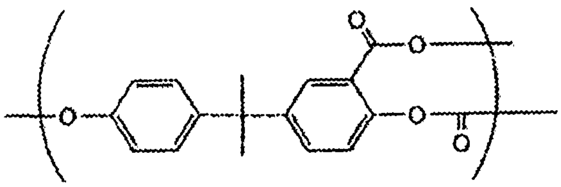

(1)

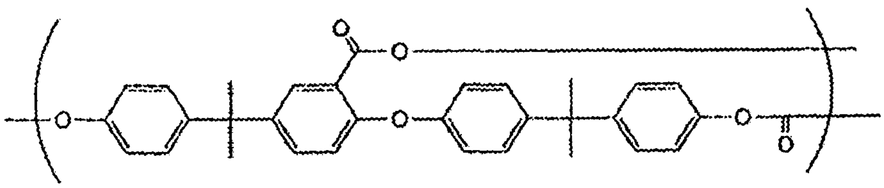

(2)

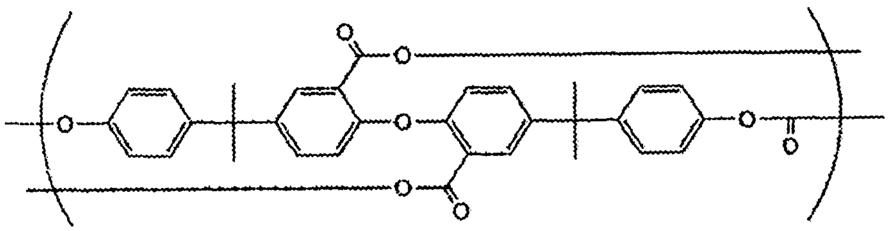

(3)

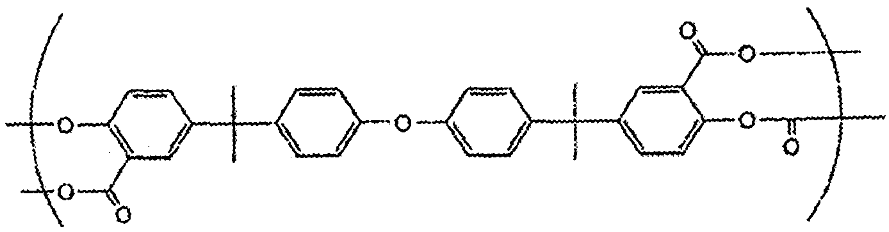

(4)

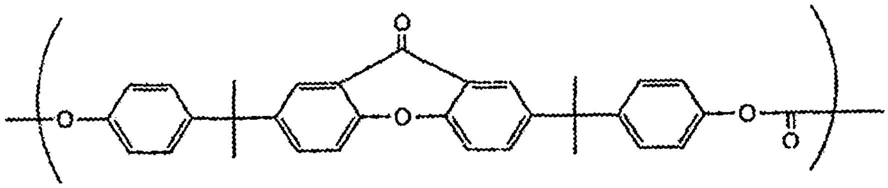

(5)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5525701 A
- JP 9059367 A
- JP 9059368 A
- JP 9067433 A
- JP 9157375 A
- JP 2000302879 A
- JP 2001031753 A